# EUROPÄISCHE PATENTSCHRIFT

(11) **EP 2 524 170 B1**
(45) Veröffentlichungstag und Bekanntmachung des Hinweises auf die Patenterteilung: **26.12.2018**
(21) Anmeldenummer: 11704311.7
(22) Anmeldetag: 12.01.2011
(51) Int. Cl.: F24C 15/10, H05B 6/12, A47J 36/02, H05B 6/06

(54) **KOCHFELDVORRICHTUNG**
COOKING HOB
PLAQUE DE CUISSON

(30) Priorität: 13.01.2010 ES 201030021
(43) Veröffentlichungstag der Anmeldung: 21.11.2012
(73) Patentinhaber: BSH Hausgeräte GmbH, 81739 München (DE)
(72) Erfinder: BUÑUEL MAGDALENA, Miguel Angel, E-50017 Zaragoza (ES); DIONISIO MICOLAU, Diego, E-50013 Zaragoza (ES); ESCARTIN BARDUZAL, Andres, E-50019 Zaragoza (ES); ESTER SOLA, Francisco Javier, E-50001 Zaragoza (ES); MERINO RUBIO, Rosa Isabel, E-50018 Zaragoza (ES); PEREZ CABEZA, Pilar, E-50008 Zaragoza (ES); PLANAS LAYUNTA, Fernando, E-50009 Zaragoza (ES); TORRUBIA MARCO, Demetrio, E-50003 Zaragoza (ES)
(86) Internationale Anmeldenummer: PCT/IB2011/050128
(87) Internationale Veröffentlichungsnummer: WO 2011/086504

(56) Entgegenhaltungen:
- EP-A1- 0 287 336
- WO-A2-2008/053110
- DE-A1- 10 122 210
- DE-A1-102005 025 896
- DE-A1-102007 061 272
- JP-A- 2005 302 633
- JP-A- 2007 178 224
- JP-A- 2008 297 177
- US-B2- 6 930 289

## Beschreibung

Aus der Druckschrift DE 38 73 590 T2 ist eine Hausgerätvorrichtung mit einem Kochbereich bekannt, welcher ein thermochromes Element aufweist, das bei einem Betriebsvorgang anzeigt, dass eine Fläche heiß ist.

Aus der Druckschrift US 6 930 289 B2 ist ebenfalls eine Hausgerätevorrichtung bekannt. Aus der Druckschrift DE 101 22 210 A1 ist ein Kochfeld mit thermochromen Elementen bekannt, welche bezüglich einer Draufsicht auf das Kochfeld jeweils neben einer Kochzone angeordnet sind.

Aus der Druckschrift DE 10 2007 061 272 A1 , welche die Merkmale des Oberbegriffes offenbart, ist ein thermochromes Element bekannt, welches zumindest ein vanadiumhaltiges Material aufweist, wobei das vanadiumhaltige Material sich über zumindest siebzig Prozent eines Glaskeramikkochfelds oder einer Glaskeramikplatte erstreckt, wobei das thermochrome Element eine erste und zumindest eine zweite Hauptseite aufweist, welche in wenigstens einem Betriebszustand jeweils zumindest zu einem Großteil an wenigstens einem weiteren Element anliegen.

Aus den Druckschriften JP 2008 297177 A und WO 2008/053110 A2 sind ebenfalls thermochrome Elemente bekannt Weiterer relevanter Stand der Technik ist aus den Dokumenten DE 10 2005 025896 A1, JP 2005 302633 A und JP 20067 178224 A bekannt.

Die Aufgabe der Erfindung besteht insbesondere darin, eine gattungsgemäße Vorrichtung mit verbesserten Eigenschaften hinsichtlich einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird eine Kochfeldvorrichtung mit wenigstens einem thermochromen und/oder thermolumineszenten Element vorgeschlagen, welches wenigstens ein vanadiumhaltiges Material aufweist. Unter einem "thermochromen" Element soll insbesondere ein Element verstanden werden, das die Eigenschaft der Thermochromie aufweist. Unter einem "thermolumineszenten" Element soll insbesondere ein Element verstanden werden, das die Eigenschaft der Thermolumineszenz aufweist. Unter einem "vanadiumhaltigen Material" soll insbesondere ein Material verstanden werden, welches Vanadiumatome und/oder Vanadiumionen und/oder wenigstens eine Vanadiumverbindung aufweist. Mit einer erfindungsgemäßen Ausgestaltung kann eine hohe Effizienz erreicht werden. Insbesondere kann ein effizientes Herstellen der Kochfeldvorrichtung erreicht werden. Im Besonderen kann ein einfaches Verbinden des thermochromen und/oder thermolumineszenten Elements mit wenigstens einem anderen Bauteil erreicht werden. Insbesondere kann erreicht werden, dass bei einem Betriebsvorgang, bei dem Kochgeschirr erhitzt wird, Wärmestrahlung zumindest zu einem erheblichen Teil von dem thermochromen und/oder thermolumineszenten Element reflektiert und/oder absorbiert wird und dadurch elektronische Bauteile der Hausgerätvorrichtung von der Wärmestrahlung abgeschirmt werden.

Ferner wird vorgeschlagen, dass das vanadiumhaltige Material in wenigstens einem Temperaturbereich ein Halbleiter ist. Hierdurch kann ein benutzerfreundliches optisches Verhalten des vanadiumhaltigen Materials erreicht werden. Insbesondere kann erreicht werden, dass das vanadiumhaltige Material bei Zimmertemperatur transparent ist.

Vorzugsweise ist das vanadiumhaltige Material in dem Temperaturbereich ein dotierter Halbleiter. Dadurch kann ein sensitives optisches Verhalten in Abhängigkeit von einer Temperatur des vanadiumhaltigen Materials erreicht werden. Insbesondere kann durch ein bestimmtes Dotieren des Halbleiters eine Temperatur bestimmt werden, bei der eine Farbveränderung des vanadiumhaltigen Materials stattfindet.

Außerdem wird vorgeschlagen, dass das vanadiumhaltige Material Vanadiumdioxid aufweist. Auf diese Weise kann erreicht werden, dass das vanadiumhaltige Material bei hohen Temperaturen opak ist, wodurch elektronische Komponenten der Hausgerätvorrichtung vor Wärmestrahlung geschützt werden können.

Mit Vorteil erstreckt sich das vanadiumhaltige Material über wenigstens einen Großteil einer Gesamtkochzonenfläche. Unter einer "Gesamtkochzonenfläche" soll insbesondere eine Vereinigung aller Flächen verstanden werden, die eine Kochzone aufweist. Unter einer "Kochzone" soll insbesondere ein Flächenbereich einer Kochfeldvorrichtung verstanden werden, der zu einem gleichzeitigen Aufbringen eines einzigen zu erhitzenden Kochgeschirrelements vorgesehen ist und der zum Positionieren von Kochgeschirr gekennzeichnet ist. Unter einem "Großteil" der Gesamtkochzonenfläche sollen erfindungsgemäß zumindest siebzig Prozent und besonders bevorzugt zumindest neunzig Prozent der Gesamtkochzonenfläche verstanden werden. Unter "vorgesehen" soll insbesondere speziell ausgelegt und/oder speziell ausgestattet verstanden werden. Hierdurch kann eine komfortable Benutzbarkeit erreicht werden. Insbesondere kann die Kochzone auf einfache Weise von einem Benutzer erkannt werden.

Vorzugsweise erstreckt sich das vanadiumhaltige Material über wenigstens einen erheblichen Teil einer Kochgeschirrhauptträgerfläche. Unter einer "Kochgeschirrhauptträgerfläche" soll insbesondere eine Fläche eines Kochfelds verstanden werden, die zu einem Aufstellen von Kochgeschirr vorgesehen ist und die vorzugsweise eine Seite eines einzigen Bauteils ist, wobei das Bauteil vorzugsweise einstückig ausgebildet ist und wobei sich die Fläche vorzugsweise von einer Fläche einer Warmhalteplatte unterscheidet. Darunter, dass das Bauteil "einstückig" ausgebildet ist, soll insbesondere verstanden werden, dass es in einer Spritzung und/oder in einem Guss hergestellt ist und/oder nur unter Zerstörung trennbar ist. Dadurch kann ein einfaches Erkennen von erhitzten Flächenbereichen erreicht werden.

Außerdem wird vorgeschlagen, dass das thermochrome und/oder thermolumineszente Element dazu vorgesehen ist, zumindest einen Teil eines Heißbereichumrisses sichtbar zu machen. Unter einem "Heißbereichumriss" soll insbesondere eine Trennungslinie verstanden werden, welche einen erhitzten Flächenbereich von einem im Wesentlichen unerhitzten Flächenbereich trennt, wobei die Trennungslinie vorzugsweise jeweils einen Randbereich der beiden Flächenbereiche bildet. Unter einem "im Wesentlichen unerhitzten" Flächenbereich soll insbesondere ein Flächenbereich verstanden werden, der eine Temperatur aufweist, welche höchstens fünfzig Prozent, vorzugsweise höchstens zwanzig Prozent und besonders bevorzugt höchstens zwei Prozent von einer Zimmertemperatur, die insbesondere 20°C ist, und/oder einer Umgebungstemperatur abweicht, wobei die Temperaturen bevorzugt in °C gemessen werden, und/oder welche kleiner ist als eine Temperatur, bei welcher das thermochrome Element bei einem Erhitzen seine Farbe ändert. Unter einem "erhitzten" Flächenbereich soll insbesondere ein Flächenbereich verstanden werden, der eine höhere Temperatur aufweist als ein unerhitzter Flächenbereich, wobei die Temperatur vorzugsweise größer ist als eine Temperatur, bei welcher das thermochrome Element bei einem Erhitzen seine Farbe ändert, wobei dem Flächenbereich zum Erreichen seiner Temperatur vorzugsweise Hitze von wenigstens einem Heizmittel der Hausgerätvorrichtung zugeführt wurde. Hierdurch kann eine komfortable Benutzbarkeit erreicht werden. Insbesondere kann erreicht werden, dass ein Benutzer besonders einfach erhitzte und unerhitzte Bereiche voneinander unterscheiden kann.

Vorzugsweise weist die Hausgerätvorrichtung ein Bauelement auf, welches eine Seite aufweist, die eine Kochgeschirrhauptträgerfläche eines Kochfelds ist, welche zu einem gleichzeitigen Aufstellen von mehreren Kochgeschirrelementen vorgesehen ist und welche zumindest zu einem Großteil eine Kochgeschirrerhitzungszone ist. Unter einer "Kochgeschirrerhitzungszone" soll insbesondere eine Teilfläche der Kochgeschirrhauptträgerfläche verstanden werden, an welcher Kochgeschirrbereiche, welche an einem beliebigen Teil der Teilfläche anliegen, direkt von einem Heizmittel der Hausgerätvorrichtung erhitzbar sind. Darunter, dass ein Kochgeschirrbereich "direkt" von einem Heizmittel erhitzbar ist, soll insbesondere verstanden werden, dass ein von dem Heizmittel erzeugtes Magnetfeld Wirbelströme, welche zu einer stellenweisen Erhitzung des Kochgeschirrbereichs auf wenigstens 100°C geeignet sind, in dem Kochgeschirrbereich erzeugen kann und/oder dass von dem Heizmittel emittierte Strahlung den Kochgeschirrbereich direkt treffen kann und/oder dass das Heizmittel den Kochgeschirrbereich durch materielle Wärmeübertragung auf wenigstens 100°C erhitzen kann. Hierdurch kann eine benutzerfreundliche Bauweise der Hausgerätvorrichtung erreicht werden. Insbesondere kann ein komfortables Aufstellen von Kochgeschirr auf die Kochgeschirrerhitzungszone erreicht werden.

Mit Vorteil weist die Hausgerätvorrichtung wenigstens eine obere Sichteinheit auf, welche in zumindest einem betriebsbereiten Zustand frei von Kochzonenmarkierungen ist. Unter einer "oberen Sichteinheit" der Hausgerätvorrichtung soll insbesondere eine Baueinheit der Hausgerätvorrichtung verstanden werden, welche alle Bauteile aufweist, die in wenigstens einem Betriebszustand in einer Draufsicht auf die Hausgerätvorrichtung und vorzugsweise auf ein Hausgerät, das die Hausgerätvorrichtung aufweist, sichtbar sind. Unter einer "Kochzonenmarkierung" soll insbesondere eine Markierung verstanden werden, welche dazu vorgesehen ist, einen Teilbereich der Kochgeschirrhauptträgerfläche zu kennzeichnen, der zu einem bevorzugten Aufstellen von zu erhitzendem Kochgeschirr vorgesehen ist, wobei die Markierung vorzugsweise wenigstens eine Trennungslinie zwischen einer Kochzone und einem Bereich, der außerhalb aller Kochzonen angeordnet ist, ist und wobei die Markierung vorzugsweise zumindest teilweise durch eine Bedruckung gebildet ist. Dadurch kann eine hohe Flexibilität erreicht werden. Insbesondere kann ein flexibles Nutzen von Kochgeschirrerhitzungszonen erreicht werden.

Ferner wird vorgeschlagen, dass das thermochrome und/oder thermolumineszente Element eine erste und zumindest eine zweite Hauptseite aufweist, welche in wenigstens einem Betriebszustand jeweils zumindest zu einem Großteil an wenigstens einem weiteren Element anliegen. Unter einer "Hauptseite" des thermochromen und/oder thermolumineszenten Elements soll insbesondere eine Seite des thermochromen und/oder thermolumineszenten Elements verstanden werden, die eine größere Fläche aufweist als eine bestimme Anzahl von Seiten des thermochromen und/oder thermolumineszenten Elements jeweils aufweisen, wobei die bestimme Anzahl von Seiten eine um zwei verminderte Gesamtanzahl von Seiten des thermochromen und/oder thermolumineszenten Elements ist. Darunter, dass eine Hauptseite "zumindest zu einem Großteil" an wenigstens einem weiteren Element anliegt, soll insbesondere verstanden werden, dass wenigstens fünfzig Prozent, vorzugsweise zumindest siebzig Prozent und besonders bevorzugt zumindest neunzig Prozent einer Gesamtfläche der Hauptseite an dem weiteren Element anliegen. Dadurch kann eine robuste Bauweise erreicht werden. Insbesondere kann ein zuverlässiger Schutz des thermochromen und/oder thermolumineszenten Elements erreicht werden.

Vorzugsweise weist die Hausgerätvorrichtung wenigstens ein silikonhaltiges Element auf, welches materiell mit dem thermochromen und/oder thermolumineszenten Element verbunden ist. Darunter, dass das silikonhaltige Element "materiell" mit dem thermochromen und/oder thermolumineszenten Element verbunden ist, soll insbesondere verstanden werden, dass das silikonhaltige Element und das thermochrome und/oder thermolumineszente Element stoffschlüssig miteinander verbunden sind und/oder dass es wenigstens einen Festkörper gibt, der das silikonhaltige Element an dem thermochromen und/oder thermolumineszenten Element befestigt. Dadurch kann eine konstruktiv einfache Bauweise erreicht werden.

Außerdem wird ein Hausgeräteherstellungsverfahren, insbesondere zur Herstellung einer Hausgerätvorrichtung, vorgeschlagen, bei welchem wenigstens ein thermochromes und/oder thermolumineszentes Material auf zumindest ein Bauteil zumindest durch Sputtern aufgetragen wird. Dadurch kann eine hohe Effizienz erreicht werden. Insbesondere kann ein effizientes und insbesondere einfaches Herstellen der Hausgerätvorrichtung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf ein Kochfeld mit einer erfindungsgemäßen Kochfeldvorrichtung,
- Fig. 2: ein II-II-Schnitt durch einen Schichtkörper der Kochfeldvorrichtung und
- Fig. 3: eine Draufsicht auf ein alternatives Ausführungsbeispiel eines Kochfelds, welches verschiedene Kochzonen aufweist.

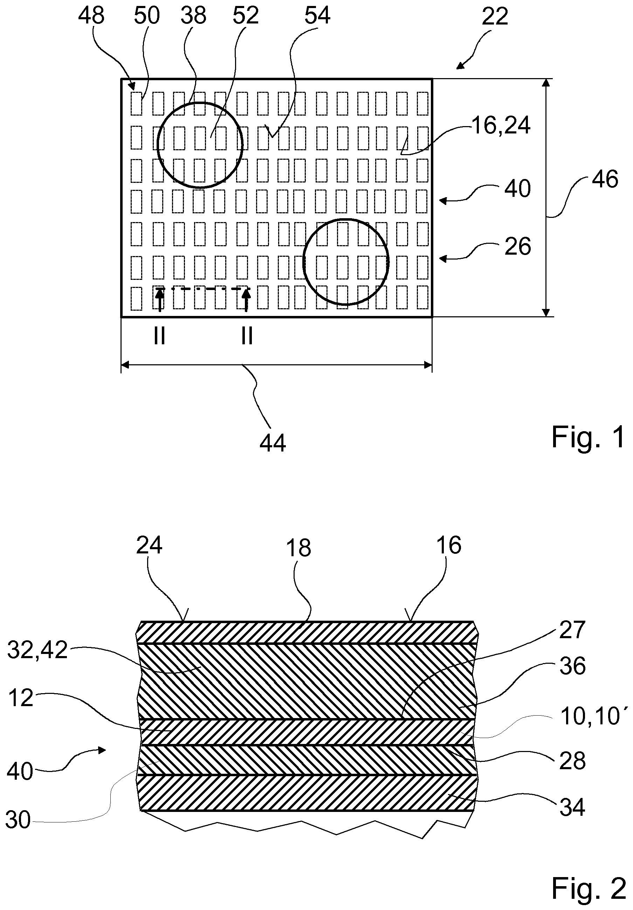

Figur 1 zeigt eine Draufsicht auf ein als Induktionskochfeld ausgebildetes Kochfeld 22 mit einer Kochfeldvorrichtung in einem Betriebszustand. Die Kochfeldvorrichtung weist eine Kochgeschirrhauptträgerfläche 16 auf, die zu einem Aufstellen von mehreren und insbesondere von vier Töpfen vorgesehen ist. Die Kochgeschirrhauptträgerfläche 16 ist eine Oberseite eines quaderförmigen Schichtkörpers 40 (Figuren 1 und 2), welcher eine Glaskeramikplatte 42 aufweist, die sich über eine gesamte Länge 44 und eine gesamte Breite 46 der Kochfeldvorrichtung erstreckt. Des weiteren weist der Schichtkörper 40 eine Schicht 10' aus vanadiumhaltigem Material 12 auf, die sich ebenfalls über eine gesamte Länge 44 und eine gesamte Breite 46 der Kochfeldvorrichtung erstreckt, in dem Betriebszustand unterhalb der Glaskeramikplatte 42 angeordnet ist und eine Unterseite der Glaskeramikplatte 42 vollständig bedeckt, so dass sich das vanadiumhaltige Material 12 über die gesamte Kochgeschirrhauptträgerfläche 16 ersteckt und von der Kochgeschirrhauptträgerfläche 16 beabstandet angeordnet ist. Die Schicht 10' bildet ein thermochromes Element 10 und ist aus Vanadiumdioxid gebildet, welches unterhalb von 68°C ein Halbleiter ist und transparent ist. Eine obere Sichteinheit 26 der Kochfeldvorrichtung, welche in Figur 1 sichtbar ist, ist in einem betriebsbereiten Zustand des Kochfelds 22 nach einer langzeitigen Nichtbenutzung des Kochfelds 22 frei von Kochzonenmarkierungen und weist eine einheitliche Farbe auf. Ferner ist das Kochfeld 22 frei von Bedruckungen mit kreisförmigen Linien, die Kochbereiche markieren. Der Schichtkörper 40 weist ferner ein als Schicht ausgebildetes Bauelement 18 auf, welches die Kochgeschirrhauptträgerfläche 16 bildet und welches durch Siebdruck auf die Glaskeramikplatte 42 aufgebracht ist. Das Bauelement 18 ist aus keramischem Material gebildet. Prinzipiell ist auch denkbar, dass das Bauelement 18 fehlt und die Glaskeramikplatte 42 die Kochgeschirrhauptträgerfläche 16 bildet. Prinzipiell ist denkbar, dass das Bauelement 18 eine oder mehrere Markierungen bildet, welche Kochgeschirraufstellbereiche markieren.

Ferner ist die Kochgeschirrhauptträgerfläche 16 eine Kochgeschirrerhitzungszone 24. Hierzu weist die Kochfeldvorrichtung eine Heizeinheit 48 mit matrixförmig angeordneten Spulen 50 auf. Mittels der Spulen 50 kann ein Kochgeschirr unabhängig von einer Stelle, an der das Kochgeschirr auf die Kochgeschirrhauptträgerfläche 16 aufgestellt ist, zur Durchführung eines Kochvorgangs erhitzt werden.

Das thermochrome Element 10 ist dazu vorgesehen, einen Heißbereichumriss 38 eines erhitzten Oberseitenbereichs 52 des Schichtkörpers 40 sichtbar zu machen. Wird ein erhitzter Topf, welcher auf dem Oberseitenbereich 52 erhitzt wurde, von dem Schichtkörper 40 abgenommen, so unterscheidet sich eine Farbe, in welcher der Oberseitenbereich 52 einem Benutzer erscheint, von einer Farbe, in welcher ein Bereich 54 erscheint, der den Oberseitenbereich 52 umgibt, wenn ein unterhalb des Oberseitenbereichs 52 angeordneter Bereich des Elements 10 bei dem Erhitzen insbesondere durch Wärmetransport über 68°C erhitzt wurde. In diesem Fall ist der genannte Bereich des Elements 10 opak und dunkler als ein ihn umgebender Bereich des Elements 10, was den Heißbereichumriss 38 sichtbar macht. Ist ein Topf auf dem erhitzten Oberseitenbereich 52 angeordnet, so wird dadurch, dass der genannte Bereich des Elements 10 opakt ist, erreicht, dass nur eine geringe Menge an Wärmestrahlung von einer Unterseite des Topfs zu einer Elektronik der Kochfeldvorrichtung gelangen kann, weil ein Großteil der Wärmestrahlung von dem genannten Bereich des Elements 10 reflektiert oder absorbiert wird.

Eine Oberseite und eine Unterseite des Elements 10 bilden in dem Betriebszustand zwei Hauptseiten 27, 28 des Elements 10. Die Hauptseite 27, welches die Oberseite ist, ist stoffschlüssig an der Unterseite eines Elements 32, nämlich der Glaskeramikplatte 42 befestigt und liegt damit vollständig an dieser an. Die Hauptseite 28 ist stoffschlüssig an einem weiteren Element 30 des Schichtkörpers 40, welches eine Schicht ist, befestigt und liegt vollständig an diesem an. Das Element 30 ist metallisch und wird durch Sputtern aufgebracht. Prinzipiell kann das Element 30 durch eine organische und/oder keramische Farbe gebildet sein. Ferner weist die Kochfeldvorrichtung ein als Schutzschicht ausgebildetes Element 34 auf, das stoffschlüssig an dem Element 30 befestigt ist und von einer silikonhaltigen Farbe gebildet ist. Das Element 34 erstreckt sich über die gesamte Kochgeschirrhauptträgerfläche 16, wobei es beabstandet von dieser angeordnet ist.

Das Element 10 wird bei einer Herstellung der Kochfeldvorrichtung durch Sputtern auf ein Bauteil 36, und zwar auf die Glaskeramikplatte 42 aufgebracht. Prinzipiell ist denkbar, dass das Element 10 auch durch eine Drucktechnik, und zwar insbesondere durch Siebdruck, aufgebracht wird. Dabei werden thermochrome und/oder thermolumineszente Materialien in keramische Materialen eingebracht und anschließend gedruckt. Insbesondere ist denkbar, dass bei einem Aufbringen des Elements 10 durch Druck und insbesondere Siebdruck das hergestellte Element 10 ein Muster aufweist. Ferner ist denkbar, die Kochfeldvorrichtung ohne das Element 30 auszubilden. Außerdem ist denkbar, dem Schichtkörper 40 ein weiteres Siebdruckelement hinzuzufügen.

Prinzipiell ist auch denkbar, dass das Element aus dotiertem Vanadiumdioxid, wie zum Beispiel mit 1,9% Wolfram dotiertem Vanadiumdioxid, besteht. Besteht das Element aus mit 1,9% Wolfram dotiertem Vanadiumdioxid, wird das Element bei einem Erhitzen bei einer Temperatur von 29°C von einem Halbleiter zu einem Metall. Prinzipiell ist auch denkbar, dass das Element thermolumineszent anstatt thermochrom ist. Prinzipiell ist denkbar, dass das Element 10, für den Fall, dass es thermolumineszent anstatt thermochrom ist, durch Siebdruck oder durch Sputtern aufgebracht wird.

Prinzipiell ist denkbar, dass das Element 10, welches als Schicht ausgebildet ist, an verschiedenen Stellen verschiedene Dicken aufweist. Hierdurch können insbesondere in einer Draufsicht die verschiedenen Stellen voneinander unterschieden werden. Insbesondere können die verschiedenen Stellen voneinander unterschieden werden, wenn sie identische Temperaturen aufweisen.

Die Glaskeramikplatte 42 weist eine Dicke von 4 mm, das Element 10 eine Dicke von 5 bis 250 nm und das Element 34 eine Dicke von 0,1 bis 1 mm auf.

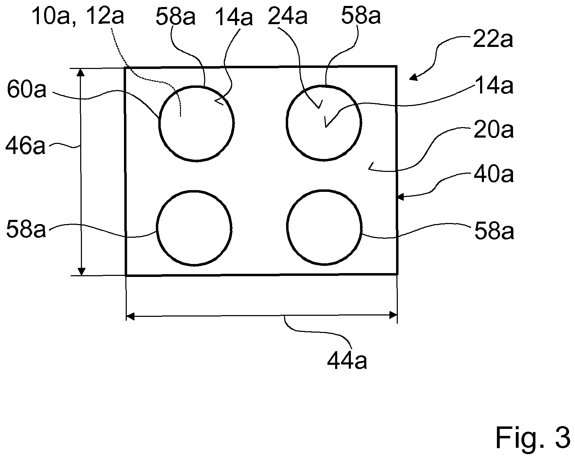

In der Figur 3 ist ein alternatives Beispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist jedoch den Bezugszeichen des Ausführungsbeispiels in der Figur 3 der Buchstabe "a" hinzugefügt. Die nachfolgende Beschreibung beschränkt sich im Wesentlichen auf die Unterschiede zu dem Ausführungsbeispiel in den Figuren 1 und 2, wobei bezüglich gleich bleibender Bauteile, Merkmale und Funktionen auf die Beschreibung des Ausführungsbeispiels in den Figuren 1 und 2 verwiesen werden kann.

Figur 3 zeigt eine Draufsicht auf ein Kochfeld 22a mit einer alternativen Ausbildung einer Kochfeldvorrichtung. Die Kochfeldvorrichtung weist vier kreisförmig ausgebildete Kochzonen 58a auf, welche durch Siebdruckmarkierungen 60a markiert sind, welche an einer Oberseite der Kochfeldvorrichtung angeordnet sind und auf einer Glaskeramikplatte 42 der Kochfeldvorrichtung aufgebracht sind. Eine Heizvorrichtung der Kochfeldvorrichtung weist vier Strahlungsheizeinheiten auf (nicht dargestellt), welche in dem Betriebszustand jeweils unterhalb einer der Kochzonen 58a angeordnet sind und welche dazu vorgesehen sind, auf der jeweiligen Kochzone 58a angeordnetes Kochgeschirr zu erhitzen. Die Kochfeldvorrichtung weist vier thermochrome Elemente 10a auf, die jeweils unterhalb einer Oberfläche einer der Kochzonen 58a angeordnet sind. Ferner erstrecken sich die Elemente 10a nur jeweils über eine gesamte Gesamtkochzonenfläche 14a einer der Kochzonen 58a und nicht darüber hinaus. Prinzipiell ist auch denkbar, dass sich das Element 10 über eine gesamte Länge 44a und eine gesamte Breite 46a der Kochfeldvorrichtung erstreckt und bezüglich der Draufsicht rechteckförmig ausgebildet ist.

**Bezugszeichen**

| | | | |
|---|---|---|---|
| 10 | Element | 60 | Siebdruckmarkierung |
| 10' | Schicht | | |
| 12 | Material | | |
| 14 | Gesamtkochzonenfläche | | |
| 16 | Kochgeschirrhauptträgerfläche | | |
| 18 | Bauelement | | |
| 22 | Kochfeld | | |
| 24 | Kochgeschirrerhitzungszone | | |
| 26 | Sichteinheit | | |
| 27 | Hauptseite | | |
| 28 | Hauptseite | | |
| 30 | Element | | |
| 32 | Element | | |
| 34 | Element | | |
| 36 | Bauteil | | |
| 38 | Heißbereichumriss | | |
| 40 | Schichtkörper | | |
| 42 | Glaskeramikplatte | | |
| 44 | Länge | | |
| 46 | Breite | | |
| 48 | Heizeinheit | | |
| 50 | Spule | | |
| 52 | Oberseitenbereich | | |
| 54 | Bereich | | |
| 58 | Kochzone | | |

## Patentansprüche

1. Kochfeldvorrichtung mit einem Schichtkörper (40), mit einer Kochgeschirrhauptträgerfläche (16) und mit wenigstens einem thermochromen und/oder thermolumineszenten Element (10; 10a), welches wenigstens ein vanadiumhaltiges Material (12; 12a) aufweist, wobei das vanadiumhaltige Material (12) sich über zumindest siebzig Prozent der Kochgeschirrhauptträgerfläche (16) erstreckt, wobei das thermochrome und/oder thermolumineszente Element (10; 10a) eine erste und zumindest eine zweite Hauptseite (27, 28) aufweist, welche in wenigstens einem Betriebszustand jeweils zumindest zu einem Großteil an Elementen (30, 32) anliegen, **dadurch gekennzeichnet, dass**
die Hauptseite (27), welche die Oberseite ist, stoffschlüssig an der Unterseite des Elements (32), nämlich einer Glaskeramikplatte (42) befestigt ist und damit vollständig an dieser anliegt, wobei die Hauptseite (28) an einem Element (30) des Schichtkörpers (40), welches eine Schicht ist, befestigt ist und vollständig an diesem anliegt, wobei das Element (30) entweder metallisch und durch Sputtern aufgebracht ist, und durch eine organische und/oder keramische Farbe gebildet sein kann, wobei die Kochfeldvorrichtung ein als Schutzschicht ausgebildetes Element (34) aufweist, das stoffschlüssig an dem Element (30) befestigt ist und von einer silikonhaltigen Farbe gebildet ist, wobei das Element (34) sich über die gesamte Kochgeschirrhauptträgerfläche (16) erstreckt, wobei es beabstandet von dieser angeordnet ist.

2. Kochfeldvorrichtung nach Anspruch 1,
**dadurch gekennzeichnet, dass**
das vanadiumhaltige Material (12; 12a) in wenigstens einem Temperaturbereich ein Halbleiter ist.

3. Kochfeldvorrichtung nach Anspruch 2,
**dadurch gekennzeichnet, dass**
das vanadiumhaltige Material (12; 12a) in dem Temperaturbereich ein dotierter Halbleiter ist.

4. Kochfeldvorrichtung nach einem der vorherigen Ansprüche,
**dadurch gekennzeichnet, dass**
das vanadiumhaltige Material (12; 12a) Vanadiumdioxid aufweist.

5. Kochfeldvorrichtung nach einem der vorherigen Ansprüche,
**dadurch gekennzeichnet, dass**
das vanadiumhaltige Material (12a) sich über wenigstens einen Großteil einer Gesamtkochzonenfläche (14a) erstreckt.

6. Kochfeldvorrichtung nach einem der vorherigen Ansprüche,
**dadurch gekennzeichnet, dass**
das thermochrome und/oder thermolumineszente Element (10) dazu vorgesehen ist, zumindest einen Teil eines Heißbereichumrisses (38) sichtbar zu machen.

7. Kochfeldvorrichtung nach einem der vorherigen Ansprüche,
**gekennzeichnet durch**
ein Bauelement (18), welches eine Seite aufweist, die eine Kochgeschirrhauptträgerfläche (16) eines Kochfelds (22) ist, welche zu einem gleichzeitigen Aufstellen von mehreren Kochgeschirrelementen vorgesehen ist und welche zumindest zu einem Großteil eine Kochgeschirrerhitzungszone (24) ist.

8. Kochfeldvorrichtung nach einem der vorherigen Ansprüche,
**gekennzeichnet durch**
wenigstens eine obere Sichteinheit (26), welche in zumindest einem betriebsbereiten Zustand frei von Kochzonenmarkierungen ist.

9. Kochfeld (22; 22a), insbesondere Induktionskochfeld, mit einer Kochfeldvorrichtung nach einem der Ansprüche 1 bis 8.

10. Hausgeräteherstellungsverfahren zur Herstellung einer Kochfeldvorrichtung nach einem der Ansprüche 1 bis 8 bei welchem wenigstens ein thermochromes und/oder thermolumineszentes Material (12; 12a) auf zumindest ein Bauteil (36) zumindest durch Sputtern aufgetragen wird.

## Claims

1. Cooktop apparatus with a layered surface (40), with a main cookware support surface (16) and with at least one thermochromic and/or thermoluminescent element (10; 10a), which has at least one material (12; 12a) containing vanadium, wherein the material (12) containing vanadium extends over at least seventy percent of the main cookware support surface (16), wherein the thermochromic and/or thermo luminescent element (10; 10a) has one first and at least one second main face (27, 28), at least a majority of which, in at least one operating state, rests in each instance against elements (30, 32),
**characterised in that**
the main face (27), which is the upper face, is fastened in a material manner to the lower face of the element (32), namely a glass ceramic plate (42), and therefore rests against this in its entirety, wherein the main face (28) is fastened to an element (30) of the layered surface (40), which is a layer, and rests against this in its entirety, wherein the element (30) is either metallic and applied by sputtering, and can be formed by an organic and/or ceramic colour, wherein the cooktop apparatus has an element (34) embodied as a protective layer, which is fastened in a material manner to the element (30) and is formed of a colour containing silicon, wherein the element (34) extends over the entire main cookware support surface (16), wherein it is arranged at a distance herefrom.

2. Cooktop apparatus according to claim 1,
**characterised in that**
the material (12; 12a) containing vanadium is a semiconductor in at least one temperature range.

3. Cooktop apparatus according to claim 2,
**characterised in that**
the material (12; 12a) containing vanadium is a doped semiconductor in the temperature range.

4. Cooktop apparatus according to one of the preceding claims,
**characterised in that**
the material (12; 12a) containing vanadium has vanadium dioxide.

5. Cooktop apparatus according to one of the preceding claims,
**characterised in that**
the material (12a) containing vanadium extends over at least a majority of an overall cooking zone surface (14a).

6. Cooktop apparatus according to one of the preceding claims,
**characterised in that**
the thermochromic and/or thermo luminescent element (10) is provided to make at least part of a hot region outline (38) visible.

7. Cooktop apparatus according to one of the preceding claims,
**characterised by**
a structural element (18), which has a face which is a main cookware support surface (16) of a cooktop (22), which is provided for the simultaneous positioning of a number of cookware elements and the majority of which at least is a cookware heating zone (24).

8. Cooktop apparatus according to one of the preceding claims,
**characterised by**
at least one upper visible unit (26), which is free of cooking zone markings in at least one ready-to-operate state.

9. Cooktop (22; 22a), in particular induction cooktop, having a cooktop apparatus according to one of claims 1 to 8.

10. Household appliance production method for producing a cooktop apparatus according to one of claims 1 to 8, in which at least one thermochromic and/or thermoluminescent material (12; 12a) is applied to a least one component (36) at least by sputtering.

## Revendications

1. Dispositif de table de cuisson comprenant un corps stratifié (40), comprenant une surface de support principale (16) de récipient de cuisson et comprenant au moins un élément (10 ; 10a) thermochrome et/ou thermoluminescent, lequel présente au moins une matière (12 ; 12a) contenant du vanadium, la matière (12) contenant du vanadium s'étendant sur au moins soixante-dix pour cent de la surface de support principale (16) de récipient de cuisson, l'élément (10 ; 10a) thermochrome et/ou thermoluminescent présentant un premier côté principal et au moins un deuxième côté principal (27, 28), lesquels, dans au moins un état de fonctionnement, sont respectivement adjacents à au moins une grande partie d'éléments (30, 32), **caractérisé en ce que**
le côté principal (27), lequel est le côté supérieur, est fixé par adhérence de matière au côté inférieur de l'élément (32), à savoir à une plaque céramique (42), et est donc entièrement adjacent à celle-ci, le côté principal (28) étant fixé sur un élément (30) du corps stratifié (40), lequel élément est une couche, et étant adjacent à celui-ci, l'élément (30) étant appliqué soit de manière métallique soit par pulvérisation et pouvant être formé par une peinture organique et/ou céramique,
le dispositif de table de cuisson présentant un élément (34) réalisé en tant que couche de protection, lequel est fixé sur l'élément (30) par adhérence de matière et est formé par une peinture contenant de la silicone, l'élément (34) s'étendant sur toute la surface de support principale (16) de récipient de cuisson, en étant disposé de manière distancée de celle-ci.

2. Dispositif de table de cuisson selon la revendication 1,
**caractérisé en ce que**
la matière (12 ; 12a) contenant du vanadium est un semi-conducteur dans au moins une plage de température.

3. Dispositif de table de cuisson selon la revendication 2,
**caractérisé en ce que**
la matière (12 ; 12a) contenant du vanadium est un semi-conducteur dopé dans la plage de température.

4. Dispositif de table de cuisson selon l'une quelconque des revendications précédentes,
**caractérisé en ce que**
la matière (12 ; 12a) contenant du vanadium présente du dioxyde de vanadium.

5. Dispositif de table de cuisson selon l'une quelconque des revendications précédentes,
**caractérisé en ce que**
la matière (12a) contenant du vanadium s'étend sur au moins une grande partie d'une surface de zone de cuisson totale (14a).

6. Dispositif de table de cuisson selon l'une quelconque des revendications précédentes,
**caractérisé en ce que**
l'élément (10) thermochrome et/ou thermoluminescent est ménagé pour rendre visible au moins une partie d'un contour d'une zone chaude (38).

7. Dispositif de table de cuisson selon l'une quelconque des revendications précédentes,
**caractérisé par**
un composant (18) qui présente une face qui est une surface de support principale (16) de récipient de cuisson d'une table de cuisson (22), laquelle est ménagée pour une pose simultanée de plusieurs éléments de récipient de cuisson et laquelle est au moins en grande partie une zone d'échauffement (24) de récipient de cuisson.

8. Dispositif de table de cuisson selon l'une quelconque des revendications précédentes,
**caractérisé par**
au moins une unité de visibilité (26), laquelle, dans au moins un état prêt au fonctionnement, est exempte de marquages de zone de cuisson.

9. Table de cuisson (22 ; 22a), notamment table de cuisson à induction, comprenant un dispositif de table de cuisson selon l'une quelconque des revendications 1 à 8.

10. Procédé de fabrication d'appareil ménager destiné à la fabrication d'un dispositif de table de cuisson selon l'une quelconque des revendications 1 à 8, dans lequel au moins une matière (12 ; 12a) thermochrome et/ou thermoluminescente est appliquée sur au moins un composant (36) au moins par pulvérisation.
